# EUROPEAN PATENT APPLICATION

(11) **EP 0 859 039 A1**
(43) Date of publication of application: **19.08.1998**
(21) Application number: 98102420.1
(22) Date of filing: 12.02.1998
(51) Int. Cl.: C10B 53/02

(54) **Carbonization of wood**

(30) Priority: 18.02.1997 ZA 9701371
(71) Applicant: Patton Engineering CC, Johannesburg, Gauteng Province (ZA)
(72) Inventor: Oldnall, Derek, Irene 0062, Gauteng Province (ZA); Frampton, Patrick John, Johannesburg, Gauteng Province (ZA)
(74) Representative: Füchsle, Klaus, Dipl.-Ing.

(57) **Abstract**

The invention provides a furnace (10) suitable for making charcoal and a method of making charcoal. The furnace defines a number of heat transfer zones (26 - 32 and 36) and comprises a conveyor for carrying solids along its interior, the zones each having a fan (60) for circulating gas therethrough at least 20 times faster than gas flows along the furnace interior countercurrent to the solids. According to the method wood is carbonized by passing it through the zones which form, in succession, a drying zone (26), carbonization zones (28 - 32) and a cooling zone (36), while a wood treatment atmosphere is circulated in the zones by their fans.

## Description

THIS INVENTION relates, broadly, to the carbonization of wood to produce charcoal. More particularly, the invention relates to a method of carbonizing wood to produce charcoal, and to a furnace suitable for use in, but not restricted to, the method of the invention.

According to one aspect of the invention there is provided a method of carbonizing wood to provide charcoal by pyrolysis, which method comprises the steps of:
passing wood to be carbonized in succession through a series of wood treatment zones, the zones each forming a heat transfer zone isolated from the ambient atmosphere and comprising a drying zone followed in succession by a plurality of carbonization zones, the carbonization zones being followed in turn by a cooling zone; and
in each of said zones, passing a gaseous wood treatment atmosphere over the wood under forced circulation through the zone, the wood treatment atmosphere in each zone comprising gases at a temperature selected such that drying of the wood takes place in the drying zone, carbonization and pyrolysis of dried wood from the drying zone takes place in each of the carbonization zones at different temperatures, the temperatures in the carbonization zones changing from zone to zone, and cooling of carbonized wood from the carbonization zones takes place in the cooling zone, the circulation of the gaseous wood treatment atmospheres in the zones being arranged so that there is a ratio of wood treatment atmosphere flow rate leaving any zone in a direction upstream relative to the direction in which the wood is passed through the zones, to wood treatment atmosphere circulation rate through the zone which the atmosphere leaves in said upstream direction, of at most 5:100, at least part of the wood treatment atmosphere circulating through the carbonization zones being burnt to generate heat.

Broadly, by a gaseous wood treatment atmosphere is meant an atmosphere comprising gases, which is used to treat the wood passing through the zone in question, and in practice this atmosphere typically comprises, in accordance with the present invention and as will emerge hereunder, pyrolysis gas obtained by pyrolysing the wood being carbonized.

While the wood can in principle be passed in a vertical direction through the series of zones, it is conveniently passed horizontally therethrough, the zones being arranged in a horizontally extending series in an elongated horizontally extending furnace. Passing the wood through the zones may be continuous, eg as an elongate heap on a conveyor belt such as a perforated metal belt, or it may be in batches, eg in metal baskets carried by such belt or carried by means of an endless conveyor chain.

The forced circulation may be by means of fans or blowers, there conveniently being a separate fan for each zone; and the circulation may be in a direction transverse to the direction in which the wood is passed through the series of zones. The forced circulation may be at a high rate, eg such that the ratio between the volume which is circulated/second and the volume of the zone is at least 1:1, preferably at least 1.5:1 and more preferably at least 2:1. In this regard, by keeping the atmosphere circulating through each zone, substantially separate from the atmosphere circulating through each adjacent zone, is meant that the ratio of gas flow between adjacent zones in the direction countercurrent to that of wood travel, and the rate of gas circulation through each of said adjacent zones is at most 5:100, preferably at most 2:100 and more preferably at most 1:100.

In a particular embodiment of the invention, passing wood through the series of wood treatment zones may be in the direction which is inclined by no more than 5° to the horizontal, preferably no more than 2°, the forced circulation being at a rate such that the ratio of the circulation rate in terms of volume circulated/second to the volume of the zone in which it is circulated is at least 1:1, the carbonization zones comprising respectively a hemicellulose breakdown zone alongside and downstream of the drying zone, in the direction in which the wood is passed through the zones, a cellulose breakdown zone alongside and downstream of the hemicellulose breakdown zone, and a carbonization completion zone alongside and downstream of the cellulose breakdown zone, the method including feeding the gases making up the wood treatment atmosphere from the carbonization completion zone to the hemicellulose breakdown zone and venting said gases from the hemicellulose breakdown zone to atmosphere, and the feeding gases making up the wood treatment atmosphere from the cellulose breakdown zone to the drying zone and venting said gases from the drying zone to atmosphere.

In accordance with a particular optional feature of the method, the gas making up the atmospheres in the drying zone and in the carbonization zones progressively moves along the series of zones in an upstream direction, countercurrent to the direction in which the wood passes, so that the gases in question pass through at least two such zones, which are preferably not alongside each other.

More particularly, the carbonization zones may comprises a hemicellulose breakdown zone alongside the drying zone, the hemicellulose breakdown zone being followed, in the direction in which the wood passes, in turn by a cellulose breakdown zone and by carbonization completion zone.

In the drying zone the circulating atmosphere may be kept at a suitable temperature, eg 300-380°C, whereby the temperature of the wood in the drying zone is raised, in its interior, to a value of about 100°C, or slightly higher, eg 100-110 °C, to promote rapid drying, the drying zone conveniently being fed with drying gases from the cellulose breakdown zone, gases issuing from the drying zone in turn being vented to the ambient atmosphere. Oxygen, optionally in the form of ambient air, may be introduced to the gases fed to the drying zone from the cellulose breakdown zone, a part of said gases being reacted with the oxygen in the drying zone, preferably at a position remote from the wood, sufficient to maintain said 300-380°C temperature.

In the hemicellulose breakdown zone the circulating atmosphere may in turn be kept at a suitable temperature, eg 380-400°C, whereby at least part of the wood in the hemicellulose breakdown zone is raised to a temperature of above 270°C, sufficient to achieve hemicellulose breakdown, the hemicellulose breakdown zone conveniently being fed with pyrolysis gases from the carbonization completion zone, gases issuing from the hemicellulose breakdown zone in turn being vented to the ambient atmosphere. Oxygen, optionally in the form of ambient air, may be introduced to the pyrolysis gases fed to the hemicellulose breakdown zone from the carbonization completion zone, a part of said pyrolysis gases being reacted with the oxygen in the hemicellulose breakdown zone, preferably at a position remote from the wood, sufficient to maintain said 380-400°C temperature.

In the cellulose breakdown zone the circulating atmosphere may in turn be kept at a suitable temperature, eg 450 - 500°C, whereby at least part of the wood in the cellulose breakdown zone is raised to a temperature above 320°C, sufficient to achieve cellulose breakdown. Although cellulose breakdown is exothermic, oxygen, optionally in the form of ambient air, may be introduced to the atmosphere circulating through the cellulose breakdown zone, whereby a part of pyrolysis gases arising from cellulose breakdown and forming part of said atmosphere is reacted with oxygen, sufficient to maintain said 450 - 500°C temperature.

In the carbonization completion zone the carbonization of the wood is taken to a desired degree of completion, so that the carbonized wood issuing from this zone will comprise a desired proportion of carbon, eg 80-85% by mass carbon. In this zone the atmosphere may also be circulated at a suitable temperature, eg 350-550°C, so as to effect further cellulose breakdown and so as to raise the wood to a temperature, eg 360-400°C or more, sufficient to obtain said desired degree of completion of the carbonization within the time that the wood remains in the carbonization completion zone. Although not usually necessary, ambient air may, as in the cellulose breakdown zone, optionally be introduced to the atmosphere circulating through the carbonization completion zone, to react with sufficient pyrolysis gases arising from cellulose breakdown to maintain said 350-550°C atmosphere temperature.

Thus, in particular, the wood treatment atmosphere circulated in the drying zone may as to cause the temperature of wood issuing from the drying zone into the hemicellulose zone to have a value of at least 100°C, oxygen being introduced into the gases fed to the drying zone to react with at least part of said gases to maintain said wood temperature of at least 100°C, the wood treatment atmosphere circulated in the hemicellulose breakdown zone acting to cause the temperature of wood issuing from the hemicellulose breakdown zone into the cellulose breakdown zone to have a value of at least 270°C, oxygen being introduced into the gases fed to the hemicellulose breakdown zone to react with at least part of said gases to maintain said wood temperature of at least 270°C, the wood treatment atmosphere circulated in the cellulose breakdown zone acting to cause the temperature of the wood issuing from the cellulose breakdown zone into the carbonization completion zone to have a value of at least 320°C, oxygen being introduced into the gases circulating through the cellulose breakdown zone to react with at least part of said gases to maintain said wood temperature of 320°C, and the wood treatment atmosphere circulated in the carbonization completion zone acting to cause the temperature of the wood issuing from the carbonization completion zone to have a value of at least 360°C and to carbonize the wood to a degree such that the wood issuing from the carbonization zone has a carbon content of at least 80% by mass, oxygen being introduced into the wood treatment atmosphere circulated through the carbonization completion zone to react with at least part of said gases to maintain said wood temperature of at least 360°C and to maintain said carbon content of at least 80% by mass.

Generally, each air inlet may be provided with its own pilot burner, such as one which burns liquid petroleum gas, to provide a pilot flame for maintaining the oxygen/gas reaction. In the case of the drying zone and hemicellulose breakdown zone the air may be introduced via a burner box, outside the zone in question, which feeds into the associated fan inlet, so that the oxygen/gas reaction takes place outside the zone in question and remote from the wood, but in the case of the cellulose breakdown zone and the carbonization completion zone air injection may be directly into the associated fan inlet, so that the oxygen/gas reaction takes place adjacent the wood in question, the cellulose breakdown zone and carbonization completion zone each having no burner box. It is to be noted that all the oxygen is consumed in the oxygen/gas reaction, so that the oxygen can be regarded as burning, rather than the gas. The rate of air admission can be used to control the temperature in the zone to which it is admitted. Thus, the more air added, the higher the temperature, and the less air added, the lower the temperature. Too much added air can, however, cause burning of wood/charcoal, which is usually undesirable and should, if possible, generally be avoided. In particular, thus, each oxygen introduction may be associated with burning of a fuel, which fuel burning acts to maintain said reaction of the introduced oxygen with the gases into which it is introduced.

In the cooling zone the atmosphere which is circulated may comprise water vapour, or cooled non-combustible pyrolysis products, water vapour and indeed any other vapour being regarded as gases for this purpose. Conveniently, liquid water is sprayed, eg as a fine mist, into the cooling zone, midway between the ends of the cooling zone in the direction in which the wood passes through the cooling zone, the amount of liquid water introduced into the cooling zone being selected so that it is converted to superheated steam at a temperature of 120 - 150°C while the carbonized wood (charcoal) issues from the cooling zone at a temperature of at most 150°C. Conveniently the water is introduced at a temperature at or slightly below the boiling point of water in said zone, ie in the temperature range between boiling point and boiling point less 30°C, to reduce thermal shock on the charcoal. Thus, broadly, the method may comprise spraying liquid water into the cooling zone in a quantity selected so that it is vaporized in the cooling zone to form superheated steam, and so that carbonized wood in the form of charcoal issues from the cooling zone at a temperature of at most 150°C.

Optionally the method may include feeding the wood to be carbonized into a feed zone or incoming zone, upstream, in the direction of wood travel, of the drying zone, pyrolysis gases from the drying zone being allowed by natural circulation to move, in a direction countercurrent to the wood movement, into the feed zone, where they act to provide a slight superatmospheric pressure to resist flow of ambient air into the feed zone together with wood fed to the feed zone, and from which they can be vented to the ambient atmosphere. Also optionally, there may be a dead zone between the carbonization completion zone and the cooling zone, through which the wood is passed as it moves from the carbonization completion zone to the cooling zone, and in which the carbonized wood is allowed to undergo natural cooling before it is cooled in the cooling zone.

As all the oxygen fed to the furnace is consumed by reacting immediately with gases in the furnace, the wood is exposed to a reducing atmosphere in the furnace, and not to an oxidizing atmosphere.

According to another aspect of the invention there is provided a furnace suitable for use in the method described above, the furnace comprising an elongated housing having a hollow interior provided with a solids inlet and a solids outlet at opposite ends of the furnace, and the housing defining a series of heat transfer zones in said interior, a plurality of the heat transfer zones of the series each being associated with its own gas circulation device for circulating gas under forced circulation through the associated zone, the series of heat transfer zones extending lengthwise along the interior of the housing from the inlet to the outlet, and the furnace including a solids conveyor for passing solids along the interior of the furnace from the inlet in succession through the series of zones to the outlet, each gas circulation device being arranged to circulate gas under forced circulation through the associated zone at a high rate of circulation, sufficient to ensure that any flow of gas out of said zone towards the inlet along the interior of the housing and into an adjacent zone is at a rate such that the ratio between its flow rate and the circulation rate is at most 5:100.

The furnace may include ducting whereby at least one pair of said zones has its constituent two zones connected to each other, the zones of the pair being spaced from each other by at least one zone located therebetween, and at least one zone of each pair having a gas outlet such as a chimney associated therewith, the zone having the gas outlet conveniently being the zone which is the upstream zone of the pair, relative to the direction of solids movement by the solids transfer means along the furnace. In other words, at least one pair of the zones may comprise two zones connected to each other by ducting, the zones of each such pair being spaced and separated from each other by at least one further zone located between them, at least one zone of each pair having a gas outlet. More particularly, there may be two said pairs of zones, the gas outlet of each pair being from the zone of said pair which is closest to the solids inlet to the housing, each gas circulation device being in the form of a fan, a plurality of the zones having fans being heating zones and one of the zones having a fan being a cooling zone; and there may be four heat transfer zones which form heating zones and one heat transfer zone which forms a cooling zone, the cooling zone being between the solids outlet and the heating zones, at least one of the heating zones being provided with a burner box and with a pilot burner located in the burner box, the burner box having an oxygen inlet and having a combustion gas outlet into the associated zone.

In a particular construction there may be five said heat transfer zones associated respectively with gas circulation devices, namely four heating zones, and a cooling zone between the solids outlet and the heating zones, the heating zones being arranged in two pairs, the two zones of each pair being connected together by ducting and the two zones of each pair being spaced and separated from each other by one of the zones of the other pair, at least one zone of each pair being provided with a burner box and with a pilot burner located in the burner box, each burner box having an oxygen inlet and having a combustion gas outlet feeding into an inlet to the gas circulation device associated with that zone, the zone of each pair which is closest to the solids inlet having a gas outlet in the form of a chimney.

Each gas circulation means may be in the form of a fan located in the associated zone. In a particular embodiment of the furnace, suitable for use in the method of the invention, a plurality of the zones having gas circulation means are solids heating zones, and one of the zones having gas circulation means is a solids cooling zone. Preferably, in this embodiment, there are four heating zones, namely, in sequence, a wood drying zone, a hemicellulose breakdown zone, a cellulose breakdown zone and a carbonization completion zone, arranged in a series, the drying zone being at the upstream end of the series and the carbonization completion zone being at the downstream end of the series, relative to the direction of solids movement by the solids transfer means along the furnace. In this construction the drying zone, the hemicellulose breakdown zone, optionally the cellulose breakdown zone and optionally the carbonization completion zone may each be provided with a burner box associated therewith, the burner boxes of these zones each having a pilot burner and an air inlet from the ambient atmosphere, and an outlet into the associated zone, conveniently into the air inlet of the associated fan. In this construction two pairs of the heating zones may be connected together by ducting as described above, the cellulose breakdown zone being connected to the drying zone and the carbonization completion zone being connected to the hemicellulose breakdown zone. If burner boxes are provided for the cellulose breakdown zone and for the carbonization completion zone, these zones will have their burner boxes connected to the associated fan inlets and the burner boxes will be at a sub-atmospheric pressure. The outlets from the cellulose breakdown zone and the carbonization completion zone into the associated ducting may thus be from the plenums of these zones, below the associated fans, where the pressure is slightly above atmospheric, to encourage flow along the ducting. The drying zone and the hemicellulose breakdown zone may each have a chimney. When the cellulose breakdown zone and the carbonization completion zone have no burner boxes, the ducting can similarly feed directly from their plenums below their fans, respectively to the drying zone and to the hemicellulose breakdown zone.

The cooling zone may be provided with one or more water sprays, conveniently at a central portion relative to the direction of solids movement, and the gas circulation means of the cooling one may also be a fan or blower, the cooling zone being provided with its own chimney.

While the furnace can be made of any suitable material such as bricks or other refractory or ceramic material, it is conveniently of metal, such as stainless steel, which may be suitably insulated around the heating zones to resist heat loss, although any cooling zone will conveniently not be insulated.

In addition to the heat transfer zones, the furnace may include a feed- or incoming zone, upstream, relative to the direction of solids movement, from the drying zone, and it may include a dead zone, between the carbonization completion zone and the cooling zone. The feed zone may have a chimney, but, typically, neither the feed zone nor the dead zone will be insulated, nor will they have any gas circulation means for forced circulation of gas therethrough.

The chimneys from the feed zone, the drying zone, and the hemicellulose breakdown zone may all feed into a common outlet stack, optionally provided with means to burn combustible gases in a flare, the chimney of the cooling zone being kept separate, however, so that steam vented therefrom can be monitored by eye.

The solids transfer means may be in the form of an endless chain or belt, eg a perforated metal belt, arranged, for example, to move metal baskets along the furnace, from the inlet end of the furnace to the outlet end thereof.

Further optional features of the furnace include the provision of a door at each end of the furnace, which is capable of closing in a sufficiently airtight fashion to snuff out any undesired and unintended fire which may break out in the interior of the furnace during operation thereof. In this regard, particularly during start-up, when there may be insufficient carbon dioxide and water vapour leaving the ends of the furnace to resist ingress of oxygen from the air, so that there may be a fire danger, such doors can be used to exclude air from the interior of the furnace, until steady state operation has been approached sufficiently closely for there to be an acceptably low fire danger.

A further possibility, particularly when furnaces of relatively large diameters are in contemplation, is the provision of an air lock at each end of the furnace, to permit charging of wood into the furnace and withdrawal of charcoal therefrom while the ends of the furnace are closed off from the ambient atmosphere, so that air is excluded from the interior of the furnace to a sufficient degree, to provide an acceptably low fire danger.

The invention will now be described, by way of non-limiting illustrative example, with reference to the accompanying diagrammatic drawings, in which:
Figure 1 shows a schematic sectional side elevation of a furnace according to the invention:
Figure 2 shows a section in the direction of line II-II in Figure 1; and
Figure 3 shows an end elevation in the direction of line III-III in Figure 1.

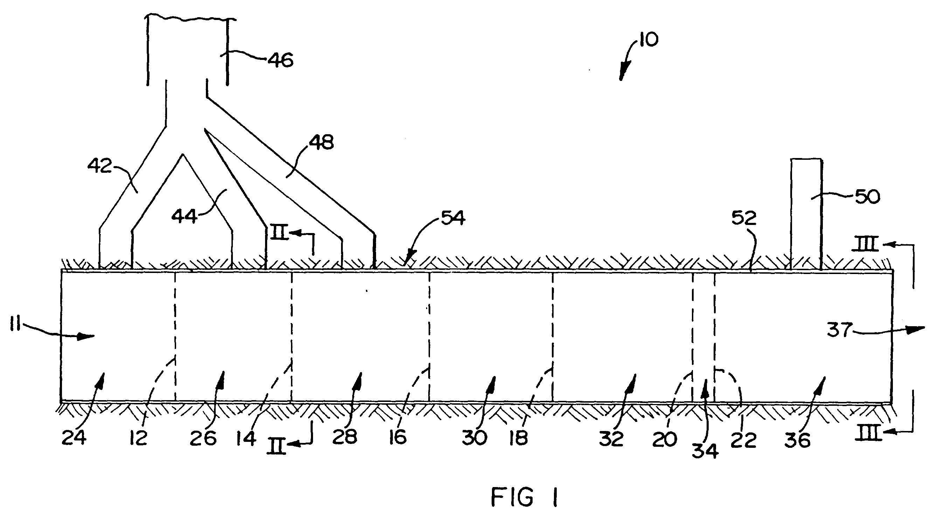

In Figure 1 of the drawings, reference numeral 10 generally designates a furnace in accordance with the present invention, suitable for use in carrying out the method of the present invention. The furnace 10 is elongated in shape and rectangular (almost square) in transverse cross-section, extending lengthwise in a horizontal direction. The furnace 10 has a wood solids inlet 11 and is shown divided at boundary planes 12, 14, 16, 18, 20 and 22 (indicated by broken lines) into a plurality of different zones in its interior, namely an inlet or feed zone 24 into which the inlet 11 feeds, a drying zone 26, a hemicellulose breakdown zone 28, a cellulose breakdown zone 30, a carbonization completion zone 32, a dead zone 34 and a cooling zone 36, being the outlet end of the furnace and having a charcoal solids outlet 37.

The zones 24 and 26 are shown provided with respective chimneys 42 and 44 leading into a common stack 46 provided with means for burning a flare at its upper end. The zone 28 is provided with a similar chimney 48 leading into the stack 46; and the zone 36 is provided with a separate chimney 50 which does not lead into the stack 46 but which merely vents to atmosphere at its upper end. The zones 24, 26, 28, 30, 32, 34 and 36 are provided by a stainless steel housing 52, and the chimneys 42, 44, 46 and 48 are similarly of stainless steel. The outer surfaces of the zones 26, 28, 30 and 32 are lined with thermal insulating material 54.

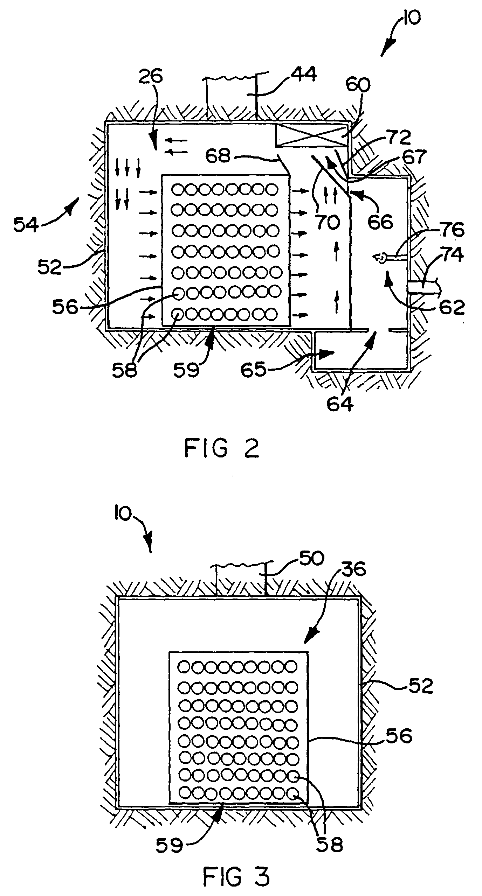

In Figures 2 and 3 of the drawings, the same reference numerals are used to designate the same parts as in Figure 1, unless otherwise specified. Figure 2 shows a cross-section of the drying zone 26, the drying zone 26 being shown enclosing a perforated mild steel basket 56 containing lumps 58 of wood, and standing on a perforated belt in the form of a stainless steel endless chain link conveyor belt 59, which extends the full length of the housing 52. The zone 26 is shown provided with a fan 60 mounted in its interior and arranged to circulate gases in said interior in the direction of the arrows, the zone 26 further being shown with an external burner box 62 having a gas inlet 64 from gas ducting 65 fed by the cellulose breakdown zone 30. A combustion gas outlet 66 from the box 62 feeds to the eye 67 of the fan 60, which is a centrifugal fan, partitions or baffles 68, 70 and 72 being provided in the zone 26 to guide, on the one hand, gas from the box 62 to the eye of the fan 60, and on the other hand, gas circulating in the zone 26 to said eye.

The constructions of the hemicellulose breakdown zone 28, of the cellulose breakdown zone 30 and of the carbonization completion zone 32 are substantially similar to each other and similar to that of the zone 26. The difference between the construction of zones 30 and 32 and that of the zones 26 and 28 is that the burner boxes 62 of zones 26 and 28 are provided with respective air nets 74 and pilot burners 76 as shown in Figure 2. Each said air inlet 74 has a gate valve or slide valve (not shown). In zones 30 and 32 there will be a gas outlet (not shown) from the plenum of the zone, below the fan 60, leading into the gas ducting (see 65 in Figure 2) which feeds respectively into said inlets 64 to the zones 26 and 28; and the zones 30 and 32 will each have no burner box but will instead be provided with an air inlet and a pilot burner (both not shown) at respective positions where air is fed directly into the eye or inlet of the associated fan. The zone 32, which has the same construction as the zone 30, is connected by the associated gas ducting (also not shown) to the zone 28.

Opposite ends of the housing 52 are open to the atmosphere at the feed zone 24 and cooling zone 36, the open end of the zone 36 being shown in Figure 3, where the wood lumps 58 of Figure 2 are still shown, but are in the form of charcoal lumps in Figure 3. As emerges from Figure 3, there is no insulating material 54 around the zone 36, the zones 24 and 34 similarly being free of insulating material 54. Liquid water sprays (not shown) are provided in the zone 36, at a position midway between the ends of the zone 36, in the longitudinal direction of the furnace.

In use of the furnace 10 in making charcoal, perforated mild steel baskets 56 containing lumps 58 of wood are fed into the feed zone 24 by placing the baskets 56 in succession on the stainless steel conveyor belt. The rate of movement of the baskets along the furnace 10 is adjustable, between rates of less than 1 m/hr, up to rates in the order of 40 m/hour. Gas and steam from the zone 26 moves by natural circulation into the zone 24, which it keeps at slightly above atmospheric pressure to resist ingress of atmospheric air at the inlet end of the furnace 10 into the zone 24 together with the baskets 56, said steam and air principally leaving the zone 24 up the chimney 42 into the stack 46. Accordingly, in the zone 24, the wood is subjected to mild warming and drying.

When the wood is moved into the zone 26, it is subjected to drying by forced gas circulation, by means of the fan 60. The capacity of the fan 60 is such that an amount of gas equal to the entire volume of the zone 26 is circulated through the zone 26 once a second, the circulation being in a direction transverse to the direction of wood movement along the furnace 10, gas circulation being illustrated by the arrows in Figure 2. The gas circulated through the zone 26 is received by the zone 26 by the ducting (not shown) from the zone 30, and is supplemented by steam given off by the wood as it is dried. In this regard the wood is rapidly heated by the gas circulation to an internal wood temperature of about 100°C. In the zone 26 maximum circulating gas temperatures are limited to not more than 380°C, the gas being circulated at a temperature of 360-380°C. Excess steam and gases from zone 26, which do not pass by natural circulation into zone 24, issue along chimney 44 to stack 46. Selected quantities of air are admitted to the burner box 62 associated with the zone 26, to cause combustion of the oxygen with a portion of the pyrolysis gases recovered from the zone 30, ignited by means of the pilot burner at 76, the air being introduced at 74 (see Figure 2).

As the wood in the baskets passes through the zone 28, it is further heated by gases circulated through zone 28 by the associated fan 60 and obtained via the ducting (not shown) from the zone 32. Gas circulation is at the same rate as in the zone 26, and also in the same direction, transverse to the direction of wood movement. The gases circulating in the zone 28 are kept at a temperature of 380-400°C, so that the wood reaches a temperature of at least 270°C. Water and volatiles continue to be driven off the wood in the zone 28, and hemicellulose breakdown takes places, at temperatures above 270°C. Excess gases from the zone 28 issue therefrom along the chimney 48 into the stack 46. In this regard it is to be noted that, at the top of the stack 46, combustible gases are burnt in a flare. Selected quantities of air are admitted to the burner box 62 associated with the zone 28, to cause combustion of the oxygen with a portion of the pyrolysis gases recovered from the zone 32, ignited by means of the pilot burner at 76, the air being introduced at 74 (see Figure 2 but with regard to the zone 28).

The wood passes from the zone 28 into the zone 30, where it is further heated by gases circulated by the associated fan at the same rate and in the same fashion as in the zones 26 and 28. The gases circulated in the zone 30 are circulated at a temperature of 450-550°C, so that the wood reaches temperatures in zone 30 in excess of 320°C. At temperatures above 320°C cellulose breakdown takes place, with the formation of inflammable pyrolysis gases. Selected quantities of air are admitted into the plenum of the zone 30, to cause combustion of a portion of the pyrolysis gases circulating through the zone 30, ignited by means of the associated pilot burner, the air inlet and pilot burner being at the inlet to the associated fan. Excess gas from the zone 30 passes along the associated ducting to the zone 26 where it is fed into the burner box 62 of the zone 26. It is also to be noted that zone 30 may be provided with heat at start-up by burning a liquid petroleum gas in said pilot burner, to bring the temperature in the zone 30 rapidly up to its operating value at start-up.

The wood then passes from the zone 30 into the zone 32, in which the carbonization of the wood is taken to the desired degree of completion. Gases are again, similarly to the zone 30, circulated through the zone 32 by the associated fan at a temperature of 350-450°C, sufficient to achieve the desired degree of carbonization during the period that the wood remains in the zone 32. For example, if the wood leaves the zone 32 at a temperature of 360°C, it can be carbonized to have a carbon content of about 80-81%, whereas, if it leaves the zone 32 at a temperature of 400°C, it can have a carbon content of up to 84% by mass. Cellulose breakdown continues to take place in the zone 32, and it should be noted that, although cellulose breakdown during carbonization is exothermic, a proportion of air can optionally be admitted to the zone 32 where use of a pilot burner can be made, as described above for the zone 30, to ensure that thermal losses in the zone 32 are made up. Air is added, and the pilot burner is located, at the inlet or eye into the fan 60. Circulation through the zone 32 is at a rate the same as gas circulation through the zones 26, 28 and 30.

In the dead zone 34 no forced circulation takes place, and carbonized wood (charcoal) moving therethrough is subject to mild natural cooling.

Finally, in the cooling zone 36, liquid water is introduced as a fine spray, midway between opposite ends of the zone 36 in the direction of wood travel, by means of liquid water sprays. Preferably the sprays are mist sprays which inject water droplets which are as fine as practicable, the water being pre-heated by heat from the zone 36 to a temperature of at most 90°C, before it is sprayed into the zone 36, and the amount of water is selected so that it is converted into steam at a temperature of pot less than 150°C, and so that charcoal issuing from the zone 36 is at a temperature of no more than 120°C, and no less than 100°C. Steam issues from the zone 36 through the associated chimney 50.

The rapid forced circulation of air, where it takes place in the heating zones as described above, will promote even temperatures in each basket of wood as its temperature increases and it turns into charcoal, and will act to reduce temperature gradients across the body of wood/charcoal in each basket. Furthermore, each lump of wood in a basket can be individually exposed to the heating gases, so that it is treated on an individual basis, unaffected by the remaining wood; and volatiles can be removed quickly from the surface of the wood, the volatiles being burnt, if necessary, at positions spaced physically from the wood/charcoal.

Carrying out the method in the various zones as described permits the different parts of the method which are carried out in the different zones to be optimized, within limits, both as regards temperature and as regards duration or time spent by the wood/charcoal in each zone. Various stages of the method can be carried out at different temperatures, higher temperatures promoting shorter reaction times and lower temperatures resisting thermal shock on the charcoal produced, which can cause cracking and a reduced, undesirable lump size.

Furthermore, the use of steam for cooling can promote accelerated cooling and reduced thermal shock, and can reduce the time delay between final carbonization and complete cooling of the charcoal, on the one hand, and packing and/or transporting of the eventual product, on the other hand.

It is a feature of the method of the present invention that, once steady state operation has been reached, whatever heat input to the process is required, can be provided by burning pyrolysis gases produced in the furnace. It is further to be noted that the cross-section of the ducting extending between the zones 26 and 30 on the one hand, and between the zones 28 and 32 on the other hand, is conveniently selected so that gas speeds along said ducting at no stage of operation exceeds 30 m/sec.

Temperature control can take place by varying the volume of air introduced to each burner box 62 via the associated air inlet at 74. If pyrolysis gas is burnt in that burner box 62, adding additional air will increase the temperature in the associated zone, but if there is no burning of pyrolysis gas in that burner box, then admission of air to the burner box 62 will reduce temperature in the associated zone. The time spent by the wood/charcoal in each zone will naturally depend on the length of each zone and on the rate at which the baskets are moved along the furnace. As indicated above, instead of supporting the baskets on a mesh belt, they can be suspended from a stainless steel endless chain. Optionally, the drive of the chain or belt can be variable to permit variation of basket speed.

During tests carried out on a furnace of the type described above, a basket of wood carrying 89.1 kg of wattle logs of 50-75 mm diameter and an average moisture content of 30.1 % by mass was passed along the length of the furnace in 260 minutes, to produce 26.4 kg of charcoal, so that yield of 42.2% by mass of the dry wood was obtained. The resulting charcoal was found to have a fixed carbon content of 86.4% by mass, a moisture content of 4.7% by mass, and an ash content of 2.7% by mass. In this trial the gas temperatures in the zones 26, 28, 30 and 32 were respectively 250°C, 420°C, 500°C and 420°C.

In another test a basket containing 114.0 kg of wattle logs of 75-100 mm diameter and an average moisture content of 30.3% was passed along the furnace over a period of 330 minutes. A total of 29.0 kg of charcoal was produced, giving a yield of 36.5% by mass of the dry wood. This charcoal was found to have a fixed carbon content of 91.0% by mass, a moisture content of 4.4% by mass, and an ash content of 2.7% by mass. Gas temperature in the zones 26, 28, 30 and 32 were respectively 350°C, 420°C, 560°C and 520°C.

Although a number of the temperatures described in the zones for the above two tests are in fact outside the preferred temperature ranges for the zones in question, as described hereinabove, the tests nevertheless do serve to demonstrate the utility of the invention, and results which are at least comparable are expected when operation is, in each zone, within the preferred temperature range for that zone.

Although the furnace and method of the present invention have been described with reference to charcoal manufacture, which charcoal can be made out of wood or wood extrudate, the furnace and method can instead be used for coke manufacture, they can be used in crematoria for cremating humans or livestock, or they can be used for the general incineration of organic wastes.

It is a feature of the invention for charcoal production that the horizontal movement of wood through the furnace can reduce break-up of wood/charcoal during its passage through the furnace. Appropriate temperature control, eg by varying the rate of air supply to the pilot burners, can resist cracking or breaking of logs fed to the furnace during the carbonization, reducing the risk of wood break-up present in vertical prior charcoal kilns known to the applicant, where charcoal is subjected to heavy compressive loads by having to support charcoal higher up in the kiln. It is to be noted that operating the flare at the upper end of the stack can reduce air pollution, and indeed the outlet gases from the stack may optionally further be processed to reduce pollution, components of the outlet gases such as wood tars, methane, methanol or the like being recovered as by-products. It is also to be noted that an important advantage of the invention is that it provides a method or process which is in principle self-sustaining in the sense that, when operating under steady-state conditions, it requires no additional heat input, other than that obtained by reacting the pyrolysis gases in the furnace with the air admitted to the furnace, heat provided by the pilot burners being negligible. Furthermore it is to be noted that the rapid gas circulation though each zone in the furnace promotes the heating of each piece of wood/charcoal, as it passes through the furnace, as if it were the only piece of wood passing through the furnace. Each piece of wood is thus urged to behave as if it were the only piece of wood in the furnace. Extremely rapid carbonization is thus provided, and the Applicant has found that, with a self-sustaining reaction using wattle as feedstock, full carbonization of a plurality of identical dry logs could be achieved in as little as 80 minutes or less.

Finally, it is to be noted that, instead of moving baskets of wood through various zones in a furnace as described hereinabove, a static basket or baskets can instead be employed to hold wood stationary in a furnace, furnace conditions being altered periodically to simulate the conditions encountered by the wood as it moves along the furnace.

Thus, according to the invention, broadly, there is provided a method of carbonizing wood to produce charcoal by pyrolysis, the method comprising subjecting the wood to drying, followed by carbonization and pyrolysis of the dried wood at a plurality of different temperatures, followed in turn by cooling of the carbonized wood, the drying, carbonization and pyrolysis, and cooling being effected by passing a succession of wood treatment atmospheres at different temperatures over the wood under forced circulation.

In one embodiment the wood may be moved through a plurality of wood treatment zones as described above; and in another embodiment of the invention the wood may be kept stationary in a single wood treatment zone, being subjected to forced circulation thereover, in succession, of various wood treatment atmospheres at different temperatures, for example a drying atmosphere at a drying temperature, a hemicellulose breakdown atmosphere at a hemicellulose breakdown temperature, a cellulose breakdown atmosphere at a cellulose breakdown temperature, a carbonization completion atmosphere at a carbonization completion temperature and a cooling atmosphere at a cooling temperature.

## Claims

1. A method of carbonizing wood to provide charcoal by pyrolysis, which method is characterized in that it comprises the steps of:
passing wood to be carbonized in succession through a series of wood treatment zones, the zones each forming a heat transfer zone isolated from the ambient atmosphere and comprising a drying zone followed in succession by a plurality of carbonization zones, the carbonization zones being followed in turn by a cooling zone; and
in each of said zones, passing a gaseous wood treatment atmosphere over the wood under forced circulation through the zone, the wood treatment atmosphere in each zone comprising gases at a temperature selected such that drying of the wood takes place in the drying zone, carbonization and pyrolysis of dried wood from the drying zone takes place in each of the carbonization zones at different temperatures, the temperatures in the carbonization zones changing from zone to zone, and cooling of carbonized wood from the carbonization zones takes place in the cooling zone, the circulation of the gaseous wood treatment atmospheres in the zones being arranged so that there is a ratio of wood treatment atmosphere flow rate leaving any zone in a direction upstream relative to the direction in which the wood is passed through the zones, to wood treatment atmosphere circulation rate through the zone which the atmosphere leaves in said upstream direction, of at most 5:100, at least part of the wood treatment atmosphere circulating through the carbonization zones being burnt to generate heat.

2. A method as claimed in claim 1, characterized in that passing the wood through the series of wood treatment zones is in a direction which is inclined by no more than 5° to the horizontal, the forced circulation being at a rate such that the ratio of the circulation rate in terms of volume circulated/second to the volume of the zone in which it is circulated is at least 1:1, the carbonization zones comprising respectively a hemicellulose breakdown zone alongside and downstream of the drying zone, in the direction in which the wood is passed through the zones, a cellulose breakdown zone alongside and downstream of the hemicellulose breakdown zone, and a carbonization completion zone alongside and downstream of the cellulose breakdown zone, the method including feeding the gases making up the wood treatment atmosphere from the carbonization completion zone to the hemicellulose breakdown zone and venting said gases from the hemicellulose breakdown zone to atmosphere, and feeding gas making up the wood treatment atmosphere from the cellulose breakdown zone to the drying zone and venting said gases from the drying zone to atmosphere.

3. A method as claimed in claim 2, characterized in that the wood treatment atmosphere circulated in the drying zone acts to cause the temperature of wood issuing from the drying zone into the hemicellulose zone to have a value of at least 100°C, oxygen being introduced into the gases fed to the drying zone to react with at least part of said gases to maintain said wood temperature of at least 100°C, the wood treatment atmosphere circulated in the hemicellulose breakdown zone acting to cause the temperature of wood issuing from the hemicellulose breakdown zone into the cellulose breakdown zone to have a value of at least 270°C, oxygen being introduced into the gases fed to the hemicellulose breakdown zone to react with at least part of said gases to maintain said wood temperature of at least 270°C, the wood treatment atmosphere circulated in the cellulose breakdown zone acting to cause the temperature of the wood issuing from the cellulose breakdown zone into the carbonization completion zone to have a value of at least 320°C, oxygen being introduced into the gases circulating through the cellulose breakdown zone to react with at least part of said gases to maintain said wood temperature of 320°C, and the wood treatment atmosphere circulated in the carbonization completion zone acting to cause the temperature of the wood issuing from the carbonization completion zone to have a value of at least 360°C and to carbonize the wood to a degree such that the wood issuing from the carbonization zone has a carbon content of at least 80% by mass, oxygen being introduced into the wood treatment atmosphere circulated through the carbonization completion zone to react with at least part of said gases to maintain said wood temperature of at least 360°C and to maintain said carbon content of at least 80% by mass.

4. A method as claimed in claim 3, characterized in that each oxygen introduction is associated with burning of a fuel, which fuel burning acts to maintain said reaction of the introduced oxygen with the gases into which it is introduced.

5. A method as claimed in any one of the preceding claims, characterized in that it comprises spraying liquid water into the cooling zone in a quantity selected so that it is vaporized in the cooling zone to form superheated steam, and so that carbonized wood in the form of charcoal issues from the cooling zone at a temperature of at most 150°C.

6. A furnace (10) characterized in that it comprises an elongated housing (52) having a hollow interior provided with a solids inlet (11) and a solids outlet (37) at opposite ends of the furnace, and the housing defining a series of heat transfer zones (26 - 32 and 36) in said interior, a plurality of the heat transfer zones of the series each being associated with its own gas circulation device (60) for circulating gas under forced circulation through the associated zone, the series of heat transfer zones extending lengthwise along the interior of the housing from the inlet to the outlet, and the furnace including a solids conveyor (59) for passing solids (58) along the interior of the furnace from the inlet in succession through the series of zones to the outlet, each gas circulation device being arranged to circulate gas under forced circulation through the associated zone at a high rate of circulation, sufficient to ensure that any flow of gas out of said zone towards the inlet along the interior of the housing and into an adjacent zone is at a rate such that the ratio between its flow rate and the circulation rate is at most 5:100.

7. A furnace as claimed in claim 6, characterized in that at least one pair of the zones comprises two zones (26, 30 or 28, 32) connected to each other by ducting (65), the zones of each such pair being spaced and separated from each other by at least one further zone (28 or 30) located between them, at least one zone (26, 28) of each pair having a gas outlet (44, 48).

8. A furnace as claimed in claim 7, characterized in that there are two said pairs of zones (26, 30 and 28, 32), the gas outlet of each pair being from the zone (26 or 28) of said pair which is closest to the solids inlet to the housing, each gas circulation device being in the form of a fan (60), a plurality (26 - 32) of the zones having fans being heating zones and one (36) of the zones having a fan being a cooling zone.

9. A furnace as claimed in any one of the preceding claims, characterized in that there are four heat transfer zones (26 - 32) which form heating zones and one heat transfer zone (26) which forms a cooling zone, the cooling zone being between the solids outlet and the heating zones, at least one (26 or 28) of the heating zones being provided with a burner box (62) and with a pilot burner (76) located in the burner box, the burner box having an oxygen inlet (74) and having a combustion gas outlet (66) into the associated zone (26 or 28).

10. A furnace as claimed in any one of the preceding claims, characetrized in that there are five (26 - 32 and 36) said heat transfer zones associated respectively with said gas circulation devices (60), namely four heating zones (26 - 32), and a cooling zone (36) between the solids outlet and the heating zones, the heating zones being arranged in two pairs (26, 30 or 28, 32), the two zones (26, 30 and 28, 32) of each pair being connected together by ducting (65) and the two zones (26, 30 or 28, 32) of each pair being spaced and separated from each other by one of the zones (28, 30) of the other pair (26, 30 or 28, 32), at least one zone (26 or 28) of each pair being provided with a burner box (62) and with a pilot burner (76) located in the burner box, each burner box having an oxygen inlet (74) and having a combustion gas outlet (66) feeding into an inlet to the gas circulation device (60) associated with that zone, the zone (26 or 28) of each pair which is closest to the solids inlet having a gas outlet in the form of a chimney (44 or 48).
